# EUROPÄISCHE PATENTSCHRIFT

(11) **EP 1 821 577 B1**
(45) Veröffentlichungstag und Bekanntmachung des Hinweises auf die Patenterteilung: **16.06.2010**
(21) Anmeldenummer: 07002937.6
(22) Anmeldetag: 12.02.2007
(51) Int. Cl.: H05B 33/08

(54) **Beleuchtungseinrichtung**
Illumination device
Dispositif d'éclairage

(30) Priorität: 21.02.2006 DE 102006008018
(43) Veröffentlichungstag der Anmeldung: 22.08.2007
(73) Patentinhaber: OSRAM Opto Semiconductors GmbH, 93055 Regensburg (DE)
(72) Erfinder: Heuser, Karsten, Dr., 91056 Erlangen (DE); Hunze, Arvid, Dr., 91056 Erlangen (DE); Pätzold, Ralph, Dr., 91154 Roth (DE)
(74) Vertreter: Epping - Hermann - Fischer

(56) Entgegenhaltungen:
- EP-A- 1 091 339
- US-A1- 2002 180 721
- US-A1- 2003 071 821
- US-A1- 2005 110 420

## Beschreibung

Es wird eine Beleuchtungseinrichtung angegeben.

Die Druckschrift US 2002/0180721 A1 Betrifft ein Display und einen elektronischen Apparat, ausgerüstet mit einem stromgeregelten Licht emittierenden Bauteil.

In der Druckschrift EP 1 091 339 A2 ist ein Displayelemente-Treiberbauteil angegeben.

Die Druckschrift US 2003/0071821 A1 betrifft eine Leuchtstärkekompensation für ein emittierendes Display.

In der Druckschrift US 2005/0110420 A1 ist ein Display mit organischen Leuchtdioden mit einer Alterungskompensation beschrieben.

Eine zu lösende Aufgabe besteht darin, eine Beleuchtungseinrichtung anzugeben, die besonders vielseitig einsetzbar ist.

Diese Patentanmeldung beansprucht die Priorität der deutschen Patentanmeldung 102006008018.1.

Gemäß zumindest einer Ausführungsform der Beleuchtungseinrichtung umfasst die Beleuchtungseinrichtung eine Lichtquelle, die eine organische Leuchtdiode (OLED) umfasst. Die organische Leuchtdiode umfasst beispielsweise zumindest eine zur Strahlungserzeugung geeignete, aktive Schicht, die ein organisches Material enthält. Beispielsweise enthält die aktive Schicht ein Polymer oder ein Material mit kleinen Molekülen. Vorzugsweise umfasst die Beleuchtungseinrichtung die organische Leuchtdiode als einzige Lichtquelle. Das heißt, die Lichtquelle ist durch die organische Leuchtdiode gebildet.

Gemäß zumindest einer Ausführungsform der Beleuchtungseinrichtung umfasst die Beleuchtungseinrichtung neben der Lichtquelle eine Regelvorrichtung. Die Regelvorrichtung ist geeignet, die Stromstärke durch die organische Leuchtdiode zu regeln. Bevorzugt ist die Regelvorrichtung geeignet, die Stromstärke durch die organische Leuchtdiode in Abhängigkeit vom Widerstand der organischen Leuchtdiode zu regeln. Beispielsweise wird die Stromstärke durch die organische Leuchtdiode von der Regelvorrichtung umso höher geregelt, je größer der elektrische Widerstand der organischen Leuchtdiode ist.

Gemäß zumindest einer Ausführungsform der Beleuchtungseinrichtung umfasst die Beleuchtungseinrichtung eine Lichtquelle, die eine organische Leuchtdiode umfasst. Weiter umfasst die Beleuchtungseinrichtung eine Regelvorrichtung, die geeignet ist, die Stromstärke durch die organische Leuchtdiode in Abhängigkeit vom elektrischen Widerstand der organischen Leuchtdiode zu regeln.

Der hier beschriebenen Beleuchtungseinrichtung liegen dabei unter anderem die folgenden Überlegungen und Erkenntnisse zugrunde:

Bei organischen Leuchtdioden nimmt mit zunehmender Betriebsdauer die Intensität der emittierten elektromagnetischen Strahlung ab. Dieser Abfall der Intensität und/oder der Helligkeit kann beispielsweise eine Funktion der Betriebsdauer sein. Der Abfall der Intensität und/oder Helligkeit schränkt die Verwendungsmöglichkeiten der organischen Leuchtdiode für eine Beleuchtungseinrichtung ein.

Es wurde festgestellt, dass mit der Betriebsdauer der organischen Leuchtdiode der Spannungsabfall an der organischen Leuchtdiode zunimmt. Dieser zunehmende Spannungsabfall ist auf ein Anwachsen des elektrischen Widerstands der organischen Leuchtdiode mit steigender Betriebsdauer zurückzuführen.

Die hier beschriebene Beleuchtungseinrichtung macht sich ausgehend von dieser Erkenntnis unter anderem die Idee zunutze, dass der elektrische Widerstand der organischen Leuchtdiode als eine passive Komponente in einer Regelvorrichtung genutzt werden kann.

Mithilfe der Regelvorrichtung kann die Stromstärke durch die organische Leuchtdiode beispielsweise derart geregelt werden, dass sie als Funktion des elektrischen Widerstands der organischen Leuchtdiode mit wachsendem Widerstand ansteigt. Auf diese Weise ist die Regelvorrichtung geeignet, die Stromstärke durch die organische Leuchtdiode derart zu regeln, dass die organische Leuchtdiode elektromagnetische Strahlung von zeitlich konstanter oder zeitlich annähernd konstanter Intensität und/oder Helligkeit emittiert.

Gemäß zumindest einer Ausführungsform der Beleuchtungseinrichtung umfasst die Regelvorrichtung dabei zumindest einen Operationsverstärker. Unter Operationsverstärker ist ein elektrisches Bauelement zu verstehen, dass einen invertierenden Eingang, einen nichtinvertierenden Eingang sowie einen Ausgang aufweist.

Gemäß zumindest einer Ausführungsform der Beleuchtungseinrichtung umfasst die Regelvorrichtung ferner zumindest einen elektrischen Widerstand. Durch Dimensionierung des zumindest einen elektrischen Widerstands ist es möglich, die Stromstärke - beziehungsweise den Anstieg der Stromstärke - mit größer werdendem Widerstand der organischen Leuchtdiode einzustellen.

Gemäß zumindest einer Ausführungsform der Beleuchtungseinrichtung umfasst die Regelvorrichtung zumindest ein Potentiometer. Alternativ zu einem Potentiometer kann die Beleuchtungseinrichtung auch eine andere Komponente umfassen, die eine kontinuierliche oder stufenweise Einstellung eines Widerstands der Regelvorrichtung erlaubt. Mit einem solchen - vorzugsweise von außerhalb der Beleuchtungseinrichtung - einstellbaren Widerstand ist es beispielsweise möglich, die Intensität und/oder Helligkeit der von der organischen Leuchtdiode emittierten elektromagnetischen Strahlung besonders genau zu steuern.

Gemäß zumindest einer Ausführungsform der Beleuchtungseinrichtung umfasst die Regelvorrichtung ferner zumindest eine elektrische Sicherung. Die elektrische Sicherung ist beispielsweise derart in der Regelvorrichtung angeordnet, dass sie eine Beschädigung der Komponenten der Regelvorrichtung aufgrund einer zu groß werdenden Stromstärke verhindert. Das heißt, steigt beispielsweise aufgrund eines Ausfalls der organischen Leuchtdiode die Stromstärke besonders stark an, kann eine Beschädigung der Regelvorrichtung durch die elektrische Sicherung verhindert werden. Auf diese Weise ist es beispielsweise möglich, dass eine nicht mehr funktionstüchtige organische Leuchtdiode ausgetauscht und durch eine neue, funktionstüchtige organische Leuchtdiode ersetzt werden kann. Die neue organische Leuchtdiode kann dann mit der gleichen Regelvorrichtung betrieben werden.

Gemäß zumindest einer Ausführungsform der Beleuchtungseinrichtung sind die Lichtquelle und die Regelvorrichtung auf einem gemeinsamen Träger angeordnet. Bei dem Träger handelt es sich beispielsweise um einen Anschlussträger für die Komponenten der Regelvorrichtung. Das heißt, der Träger weist beispielsweise Kontaktstellen und Leiterbahnen zum elektrischen Anschließen und Verbinden der Komponenten der Regelvorrichtung sowie der Lichtquelle auf.

Es ist aber auch möglich, dass es sich bei dem gemeinsamen Träger von Lichtquelle und Regelvorrichtung um ein Trägersubstrat für die organische Leuchtdiode handelt. Auf dem Trägersubstrat sind dann beispielsweise Schichten der organischen Leuchtdiode, wie zum Beispiel Elektrodenschichten und aktive, organische Schichten, sowie die Regelvorrichtung aufgebracht.

Gemäß zumindest einer Ausführungsform der Beleuchtungseinrichtung umfasst zumindest eine Komponente der Regelvorrichtung ein organisches Material. Bei der Komponente kann es sich beispielsweise um einen Widerstand, einen Operationsverstärker, einen Transistor, einen Gleichrichter und/oder um Kontaktstellen und Leiterbahnen handeln. Die zumindest eine Komponente kann das organische Material beispielsweise enthalten oder aus dem organischen Material bestehen. Die Komponente kann beispielsweise eine elektrisch leitende organische Schicht aufweisen, sowie funktionelle organische Schichten umfassen. Es ist aber auch möglich, dass Anschlussstellen oder Leiterbahnen der Regelvorrichtung ein organisches Material wie zum Beispiel PEDOT enthalten oder aus diesem Material bestehen.

Gemäß zumindest einer Ausführungsform der Beleuchtungseinrichtung sind die Lichtquelle, umfassend die organische Leuchtdiode, sowie die Regelvorrichtung gemeinsam verkapselt. Das heißt, Lichtquelle und Regelvorrichtung sind durch eine gemeinsame Verkapselung, die beispielsweise durch eine Kappe gebildet ist, möglichst luftdicht von der Umgebung abgeschlossen. Dies erweist sich als besonders vorteilhaft, wenn die Komponenten der Regelvorrichtung ein organisches Material enthalten, da sich durch den luftdichten Abschluss die Lebensdauer dieser Komponenten erhöht.

Im Folgenden wird die hier beschriebene Beleuchtungseinrichtung anhand von Ausführungsbeispielen und der dazugehörigen Figur näher erläutert.

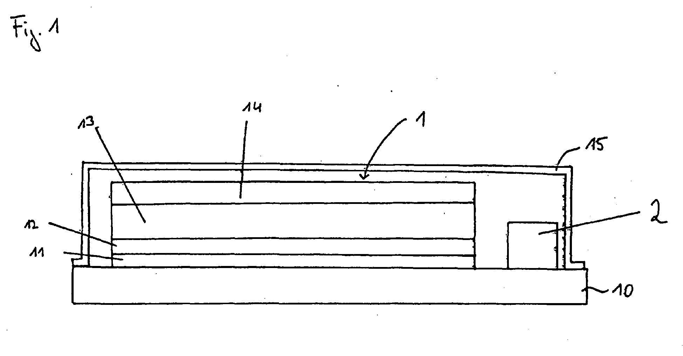

Figur 1 zeigt eine schematische Schnittdarstellung einer hier beschriebenen Beleuchtungseinrichtung gemäß einem ersten Ausführungsbeispiel.

In den Ausführungsbeispielen und in der Figur sind gleiche oder gleich wirkende Bestandteile jeweils mit den gleichen Bezugszeichen versehen. Die dargestellten Elemente sind nicht als maßstabsgerecht anzusehen, vielmehr können einzelne Elemente zum besseren Verständnis übertrieben groß dargestellt sein.

Figur 1 zeigt die hier beschriebene Beleuchtungseinrichtung gemäß einem ersten Ausführungsbeispiel.

Die Beleuchtungseinrichtung umfasst eine organische Leuchtdiode 1, welche die Lichtquelle der Beleuchtungseinrichtung bildet. Weiter umfasst die Beleuchtungseinrichtung eine Regelvorrichtung 2. Die organische Leuchtdiode 1 umfasst beispielsweise eine erste Elektrodenschicht 11, die beispielsweise als Anode der organischen Leuchtdiode vorgesehen ist. Die Elektrodenschicht 11 kann beispielsweise ein Metall wie Platin, Gold, Palladium, Indium, ein Metalloxid wie Zinnoxid, Zinkoxid, Indiumzinnoxid oder ein dotiertes Halbleitermaterial enthalten. Auf die erste Elektrode 11 ist beispielsweise eine Lochinjektionsschicht 12 aufgebracht, die aus einem Polymer oder einem Material mit kleinen Molekülen bestehen kann. Beispielsweise enthält oder besteht die Lochinjektionsschicht 12 PEDOT:PSS.

Auf die Lochinjektionsschicht 12 ist eine aktive Schicht 13 aufgebracht, die zur Strahlungserzeugung geeignet ist. Die aktive Schicht 13 enthält vorzugsweise ein organisches Material. Die aktive Schicht 13 enthält beispielsweise ein Polymermaterial oder ein Material mit kleinen Molekülen. Vorzugsweise ist die aktive Schicht 13 zur Erzeugung von weißem Licht geeignet.

Der aktiven Schicht 13 folgt eine zweite Elektrodenschicht 14 nach. Bei der zweiten Elektrodenschicht 14 kann es sich beispielsweise um eine Kathode der organischen Leuchtdiode handeln. Die zweite Elektrodenschicht 14 kann dazu eines der folgenden Materialien enthalten oder aus einem der folgenden Materialien bestehen: Aluminium, Indium, Silber, Gold, Magnesium, Kalzium, Barium.

Die organische Leuchtdiode ist wie in Figur 1 gezeigt mit ihrer ersten Elektrodenschicht 11 auf einen Träger 10 aufgebracht. Es ist aber auch möglich, dass die organische Leuchtdiode mit ihrer zweiten Elektrodenschicht 14 auf den Träger 10 aufgebracht ist.

Der Träger 10 kann beispielsweise eines der folgenden Materialien enthalten: Glas, Kunststoff, Metall.

Zusätzlich zur organischen Leuchtdiode kann auf dem Träger 10 die Regelvorrichtung 2 oder Komponenten der Regelvorrichtung 2 angeordnet sein. Dies erweist sich als besonders vorteilhaft, wenn Komponenten der Regelvorrichtung wie weiter oben beschrieben aus organischem Material bestehen, oder organisches Material enthalten. Es ist in diesem Fall insbesondere auch möglich, dass die Schichten der organischen Leuchtdiode gemeinsam mit diesen Komponenten der Regelvorrichtung auf dem Träger 10 gefertigt werden.

Organische Leuchtdiode 1 und Regelvorrichtung 2 können gemeinsam mittels der Kappe 15 verkapselt sein. Die Kappe 15 enthält oder besteht aus beispielsweise einem der folgenden Materialien: Glas, Kunststoff, Metall. Vorzugsweise verkapselt die Kappe 15 die organische Leuchtdiode 1 sowie die Regelvorrichtung 2, beziehungsweise Komponenten der Regelvorrichtung 2, hermetisch, so dass möglichst keine Luft und/oder Feuchtigkeit von außerhalb in die Beleuchtungseinrichtung eindringen kann.

Die hier beschriebene Beleuchtungseinrichtung eignet sich unter anderem aufgrund der zeitlich besonders konstanten Intensität der von der Beleuchtungseinrichtung emittierten elektromagnetischen Strahlung für einen besonders vielseitigen Einsatz. So kann die Beleuchtungseinrichtung beispielsweise zur Allgemeinbeleuchtung in Wohnräumen, Kraftfahrzeugen, Flugzeugen, Bürogebäuden oder Ähnlichem zum Einsatz kommen. Ferner ist es möglich, dass die Beleuchtungseinrichtung, als Beleuchtungseinrichtung in Fotokopierern oder Scannern Verwendung findet.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

## Patentansprüche

1. Beleuchtungseinrichtung, mit
- einer Lichtquelle (1), die eine organische Leuchtdiode umfasst, und
- einer Regelvorrichtung (2), die geeignet ist, die Stromstärke durch die organische Leuchtdiode (1) in Abhängigkeit vom elektrischen Widerstand der organischen Leuchtdiode zu regeln, wobei Lichtquelle (1) und Regelvorrichtung (2) auf einem gemeinsamen Träger aufgebracht sind,
**dadurch gekennzeichnet, dass**
Lichtquelle (1) und Regelvorrichtung (2) gemeinsam verkapselt sind und dass die Regelvorrichtung (2) ein organisches Material umfasst.

2. Beleuchtungseinrichtung gemäß dem vorherigen Anspruch, bei der die Regelvorrichtung (2) geeignet ist, die Stromstärke derart zu regeln, dass die organische Leuchtdiode (1) elektromagnetische Strahlung von zeitlich konstanter Intensität emittiert.

3. Beleuchtungseinrichtung gemäß zumindest einem der vorherigen Ansprüche,
bei der die Regelvorrichtung (2) einen Operationsverstärker umfasst.

4. Beleuchtungseinrichtung gemäß zumindest einem der vorherigen Ansprüche,
bei der die Regelvorrichtung (2) zumindest einen elektrischen Widerstand umfasst.

5. Beleuchtungseinrichtung gemäß zumindest einem der vorherigen Ansprüche,
bei der die Regelvorrichtung (2) zumindest ein Potentiometer umfasst.

6. Beleuchtungseinrichtung gemäß zumindest einem der vorherigen Ansprüche,
bei der die Regelvorrichtung (2) zumindest eine elektrische Sicherung umfasst.

7. Beleuchtungseinrichtung gemäß zumindest einem der vorherigen Ansprüche,
bei der die organischen Komponenten der Leuchtdiode (1) gemeinsam mit den organischen Komponenten der Regelvorrichtung (2) gefertigt sind.

8. Beleuchtungseinrichtung gemäß zumindest einem der vorherigen Ansprüche,
bei der Anschlussstellen oder Leiterbahnen der Regelvorrichtung (2) aus PEDOT bestehen.

## Claims

1. Illumination device, comprising
- a light source (1), which comprises an organic light-emitting diode, and
- a controller (2), which is suitable for controlling the current intensity through the organic light-emitting diode (1) in a manner dependent on the electrical resistance of the organic light-emitting diode, light source (1) and controller (2) being applied on a common carrier,
**characterized in that**
light source (1) and controller (2) are jointly encapsulated, and **in that** the controller (2) comprises an organic material.

2. Illumination device according to the preceding claim,
wherein the controller (2) is suitable for controlling the current intensity in such a way that the organic light-emitting diode (1) emits electromagnetic radiation of temporally constant intensity.

3. Illumination device according to at least one of the preceding claims,
wherein the controller (2) comprises an operational amplifier.

4. Illumination device according to at least one of the preceding claims,
wherein the controller (2) comprises at least one electrical resistor.

5. Illumination device according to at least one of the preceding claims,
wherein the controller (2) comprises at least one potentiometer.

6. Illumination device according to at least one of the preceding claims,
wherein the controller (2) comprises at least one electrical fuse.

7. Illumination device according to at least one of the preceding claims,
wherein the organic components of the light-emitting diode (1) are produced jointly with the organic components of the controller (2).

8. Illumination device according to at least one of the preceding claims,
wherein connection locations or conductor tracks of the controller (2) consist of PEDOT.

## Revendications

1. Dispositif d'éclairage comprenant
- une source de lumière (1) qui comprend une diode électroluminescente organique et
- un dispositif de régulation (2) qui est conçu pour réguler l'intensité du courant à travers la diode électroluminescente organique (1) en fonction de la résistance électrique de la diode électroluminescente organique, la source de lumière (1) et le dispositif de régulation (2) étant montés sur un support commun,
**caractérisé en ce que**
la source de lumière (1) et le dispositif de régulation (2) sont enrobés conjointement et que le dispositif de régulation (2) comprend un matériau organique.

2. Dispositif d'éclairage selon la revendication précédente, avec lequel le dispositif de régulation (2) est conçu pour réguler l'intensité du courant de telle sorte que la diode électroluminescente organique (1) émette un rayonnement électromagnétique ayant une intensité constante dans le temps.

3. Dispositif d'éclairage selon au moins l'une des revendications précédentes, avec lequel le dispositif de régulation (2) comprend un amplificateur opérationnel.

4. Dispositif d'éclairage selon au moins l'une des revendications précédentes, avec lequel le dispositif de régulation (2) comprend au moins une résistance électrique.

5. Dispositif d'éclairage selon au moins l'une des revendications précédentes, avec lequel le dispositif de régulation (2) comprend au moins un potentiomètre.

6. Dispositif d'éclairage selon au moins l'une des revendications précédentes, avec lequel le dispositif de régulation (2) comprend au moins un fusible électrique.

7. Dispositif d'éclairage selon au moins l'une des revendications précédentes, avec lequel les composants organiques de la diode électroluminescente (1) sont fabriqués conjointement avec les composants organiques du dispositif de régulation (2).

8. Dispositif d'éclairage selon au moins l'une des revendications précédentes, avec lequel les points de raccordement ou les pistes conductrices du dispositif de régulation (2) sont constitués de PEDOT.
